Europäisches Patentamt

European Patent Office

Office européen des brevets

(11) Publication number: **0 003 010**
**A1**

# EUROPEAN PATENT APPLICATION

(21) Application number: 78930008.4

(51) Int. Cl.²: **H 02 J 3/14, G 05 D 23/19**

(22) Date of filing: 21.12.78

(30) Priority: 27.12.77 US 864558

(43) Date of publication of application: 11.07.79
Bulletin 79/14

(84) Designated Contracting States: BE DE FR GB LU NL

(71) Applicant: UNITED TECHNOLOGIES CORPORATION,
1, Financial Plaza, Hartford, CT 06101 (US)

(72) Inventor: Games, John Early, 24 Zimmer Road, Granby
CT 06035 (US)
Inventor: Shoenmann, Charles Francis, 85 Parker
Road, Somers CT 06071 (US)

(74) Representative: Waxweiler, Jean et al, OFFICE
DENNEMEYER S.à.r.l. 21-25 Allée Scheffer P.O.Box 41,
L-Luxembourg (LU)

(54) **Method and apparatus for limiting the power demand in heating-ventilation-air conditioning.**

(57) A central control system includes a central processing unit (CPU) installed in a central location of a facility, and interconnected with a plurality of remote controllers, each located in an associated one of several buildings in the facility and each including a remote microprocessor (RMP) the CPU automatically controlling, simultaneously from the central location, the closed loop operation of individual environmental conditioning systems (ECS) in the several buildings comprising the facility in combination with the RMP associated therewith, and in dependence on the sensed temperature conditions within the living spaces associated with each system.

A watt meter measures the total power usage of the facility in kilowatt hours (KWH) and provides signal information representative of the instantaneous power usage to an RMP associated therewith. The CPU receives the power usage signal information from the RMP, and provides in response thereto, a predicted peak average power demand signal value in each demand interval of time over which the usage is monitored by the electric utility. The CPU compares the predicted peak average power demand signal with a monthly demand limit (MDL) signal and provides in response to a predicted signal value greater than the MDL value, load shed command signals to each of the RMPs associated with ECS, each RMP providing a turn off of selected one, or all of the ECS associated therewith, in dependence on the load shed command signals from the CPU.

TITLE MODIFIED
see front page

POWER DEMAND LIMIT IN HEATING-VENTILATION-AIR
CONDITIONING SYSTEMS

### CROSS REFERENCE TO RELATED APPLICATIONS

Portions of the subject matter hereof are also disclosed in one or more of the following, commonly owned, copending applications entitled ENERGY CONSERVATIVE CONTROL OF HEATING, VENTILATING, AND AIR CONDITIONING (HVAC) SYSTEMS, Serial No.78930001.9, filed on August 31, 1978(inv. John E. Games et al), ENERGY CONSERVATIVE CONTROL OF TERMINAL REHEAT HEATING, VENTILATING, AND AIR CONDITIONING (HVAC) SYSTEMS, Serial No.78930002.7 filed on September 20, 1978(inv.William W. Bitterli et al), TEMPERATURE CONTROL OF CHILL WATER AND STEAM IN HEATING, VENTILATION, AIR CONDITIONING (HVAC) SYSTEMS, Serial No.78930004.3 filed on October 16, 1978(inv.David M. Healey et al), TEMPERATURE CONTROL OF UNOCCUPIED LIVING SPACES, Serial No. 78930006.8 filed on December 8, 1978(inv. John E. Games et al).

### BACKGROUND OF THE INVENTION

Field of the Invention - This invention relates to control apparatus for environmental conditioning systems, and more particularly to simultaneous, central supervisory control of the closed loop operation of individual environmental conditioning systems located in each of several buildings comprising a facility.

Description of the Prior Art - As known, HVAC systems are used for controlling the environmental temperature conditions in one or more living spaces within a building enclosure. The HVAC systems include a number of well known types, such as dual duct, multi-zone, and terminal reheat type systems, each including separate sources of heating and cooling within the system.

Each HVAC system is controlled through sensed space temperature signals presented to a local sub-master, or site controller associated with the individual HVAC, the controller providing modulation of the discharge temperatures of the HVAC air handler source in dependence on the sensed temperature signals. The number of living spaces serviced by each HVAC is dependent on the heating and cooling capacity of the system, such that in multi-storied office buildings a number of HVACs may be used to service the living spaces on different floors, or groups of floors. Typically, each HVAC system in the building is controlled by its own controller, autonomously, in dependence on the desired space temperature set into a thermostat within the living space by the human occupant. In response to the need for energy conservation, a number of more recent central control systems have been developed to provide for more efficient control of the individual HVACs within the building. These building control systems typically include a central type of supervisory control over the operation of all of the HVACs within the building. These prior art supervisory controls provided reference temperature values to the HVAC site controls, which in turn regulate the associated HVAC operation through a simple closed loop proportional gain control. This simple proportional gain loop control of the HVAC results in the undesirable characteristics of droop error for too low a gain, and discharge temperature limit cycling within the hot and cold decks for too high a value of proportional gain, as described in the hereinbefore cross referenced application to Games et al (Serial No. 829,379). Each condition results in energy wasting. In the most recent building supervisory control systems, the central control is provided through a general purpose digital computer, connected through transmission lines to the various HVAC systems within the building. One such system is disclosed in a patent to Pecoraro et al, U.S. Patent No. 3,896,871, wherein a computer controlled automated building system includes a central digital computer having programmed routines stored within the computer memory, and which communicates with a number of control points, stated as including environmental equipment, through interconnecting trunk lines and line receivers associated with each control point. The computer includes an analog-to-digital (A/D) converter, and although the functional details of the control provided by the computer system of Pecoraro over the various control points is not disclosed, it would appear that the computer control is limited to providing discrete analog signals, such as temperature reference signal limits to site controllers associated with the various environmental conditioning equipment, and to monitoring the systems for alarm, or failure conditions. This typifies the level of control known in the art at the present time, i.e. the use of discrete command signals to provide step changes in reference temperatures for "set-back conditions" during unoccupied periods, or for turn on and turn off of the equipment in response to sensed alarm conditions, time of day etc. These types of systems are not fully automated since operator control is required even for routine operation, such as providing a command into the computer requesting the set-back temperature references for nighttime operation. As such, the function of the computer controlled automated building system of Pecoraro is that of a "stick control", i.e. allowing an operator in a central control station to provide discrete input control signals to remotely located equipment. The system of Pecoraro is further stated as also being applicable

- 4 -

for controlling environmental equipment in several buildings in a complex, however, once again the control being limited to discrete control signals.

The demand for operating efficiency, and the difficulty in achieving higher efficiency, is magnified where central control is desired over a number of different types of environmental conditioning system, each installed in several different buildings located at some distance from each other in a common facility, such as a university campus. These systems may include combinations of HVACs of various types, perimeter heating systems, and thermal sources providing both chill water and steam. In such installations, the degree of control varies as does tye type of environmental equipment being controlled. Similarly many systems interact with each other, such as a common chill water or common steam source providing inputs to some number of HVACs in a network servicing a single multi-storied building. In these circumstances it is desirable to control the operation of the HVACs in the network, jointly, in addition to controlling the thermal sources servicing the HVACs, in order that an overall optimization and energy savings may be achieved. This overall control is not possible in the prior art central supervisory systems which provide only discrete control command, i.e. the "stick control" type of system. Similarly, the control of the individual apparatus, i.e. the single HVAC system, perimeter heating system, or thermal source, offers the opportunity for a significant improvement in optimizing operation through the ability to change the control loop gains and reference values, instantly, in response to changes in operating conditions for the particular system. A central control which is capable of optimizing the total operation of interrelated environmental conditioning systems, or of changing the operational gain values of the individual systems, requires a hierarchical control system having the capability of providing direct inner control over the specific functions in each system, while having the capability of managing the overall operation of the entire plurality of conditioning systems in their interrelationship.

## SUMMARY OF THE INVENTION

An object of the present invention is to provide apparatus for automatically controlling, simultaneously from a central location, the closed loop operation of individual environmental conditioning systems in a plurality of buildings comprising a facility, in dependence on the sensed temperature conditions within the living spaces associated with each system. Another object of the present invention is to provide apparatus for automatically controlling, simultaneously from a central location, the closed loop operation of individual environmental systems in each building of the facility in response to selected gain constant values and parameter reference values provided by an operator at the central location, which are instantaneously changeable by the operator in one, or all of the environmental systems to accommodate changes in operating conditions. A still further object of the present invention is to provide apparatus for automatically controlling, simultaneously from a central location, the closed loop operation of individual environmental conditioning systems in each of the buildings in a facility in such a manner as to provide fail-safe control of each from the centralized location.

A still further object of the present invention is to provide apparatus for automatically limiting the peak total average power demand required for operation of the total number of environmental conditioning systems in the facility, in any given demand interval in which an electric power utility monitors the average power demand of the facility.

According to the present invention, the apparatus includes sensors installed in each of the environmental conditioning systems (ECS) for providing sensed data signals representative of actual parameter values for the controlled devices each system, control interface apparatus similarly disposed in each ECS, and responsive to closed loop control signals presented at an input thereof for providing parameter control signals to each controlled device in an associated ECS in response thereto, remote microprocessors (RMP), each associated with one or more ECSs within a common building enclosure, each responsive to the sensed data signals provided by the sensors from each ECS, the RMP having memory means for storing signals including proportional gain signals, the RMP further having means for successively sampling periodically, and registering in the memory, successively sampled values of the sensed data signals, the RMP comparing successively sampled values of the sensed data signals with a related one of a plurality of controlled device reference parameter signals presented thereto, for providing the closed loop control signals in response to a difference value therebetween, and a central processing unit (CPU), providing an actual time of day signal, and having a main memory for storing signals including ECS reference signals, the CPU responsive to the sensed data signals stored in the RMP memory for comparing the sensed data signals with the ECS reference signals for providing the controlled device reference parameter signals in response thereto. In further accord with the present invention, the apparatus further includes keyboard apparatus responsive to operator control for providing signals representative of the ECS reference signals in response to selective operation thereof, and wherein the CPU further includes means for registering the ECS reference signals in the main memory. In still further accord with the present invention, a watt meter measures the total power usage of the facility in kilowatt hours (KWH) and provides signal information representative of the instantaneous power usage at any given time to an RMP associated therewith, the RMP successively sampling periodically and registering in the memory, successively sampled values of the total power usage within each demand interval of time over which the usage is monitored by the electric utility, the CPU receiving the power usage signal information from the RMP on request, and providing in response thereto, a predicted peak average power demand signal value in each sampling period in dependence on the total power usage signal value in a related sample period, the main memory further including a monthly demand limit (MDL) signal representative of the peak average power demand value desired within a monthly billing period, the CPU comparing the predicted peak average power demand signal with the MDL signal and providing in response to a predicted signal value greater than the MDL value, load shed command signals to each of the RMPs associated with ECS systems, each RMP providing a turn off of selected one, or all of the ECS systems associated therewith, in dependence on the load shed command signals from the CPU.

In still further accord with the present invention, the CPU provides, in response to a predicted peak average power demand signal value greater than the MDL signal, command signals to each RMP for providing a change in selected controlled device reference parameter signal values to those limits which allow a reduction in the average power demand for the particular ECS system, the CPU maintaining the command signals for a determined time interval in response to the presence of a predicted peak average power demand signal value greater than the MDL signal.

The control apparatus of the present invention provides total operational control of the envrionmental conditioning systems within a facility, which may be located in several different buildings, each at some distance from each other and from a central control location. The system includes a central CPU in combination with a RMP associated with each of the groups of environmental

- 8 -

conditioning systems to be controlled, thereby providing a hierarchal control function. The apparatus includes a power demand limit function which limits the peak average power demand within any demand time interval, thereby reducing the total cost of electrical energy in operating the facility environmental conditioning systems.

These and other objects, features and advantages of the present invention will become more apparent in the light of the following description of a detailed embodiment thereof, as illustrated in the accompanying drawing.

## DESCRIPTION OF THE DRAWING

Fig. 1 is a schematic block diagram of a central supervisory control system for a facility, according to the present invention;

Fig. 2 is a simplified, schematic block diagram illustration of a microprocessing system as may be used with the present invention;

Fig. 3 is a simplified, schematic block diagram illustration of a real time digital processing system as may be used with the control system of the present invention;

Fig. 4 is a simplified block diagram illustration of the interconnection of the control system of the present invention with an HVAC system;

Fig. 5 is a simplified block diagram illustration of the interconnection of the control system of the present invention with a common thermal source;

Fig. 6 is a simplified block diagram illustration of the interconnection of the control system of the present invention with a combination HVAC and parameter heating system;

Fig. 7 is a simplified block diagram illustration of the interconnection of the control system of the present invention with a terminal reheat type of HVAC system;

Fig. 8 is an illustration of sensed data signal information used in the description of the control system of the present invention; and

Fig. 9A, 9B is a logic flowchart diagram illustrating the processing steps incorporated in a power demand limit function as provided by the control system of the present invention.

## DETAILED DESCRIPTION

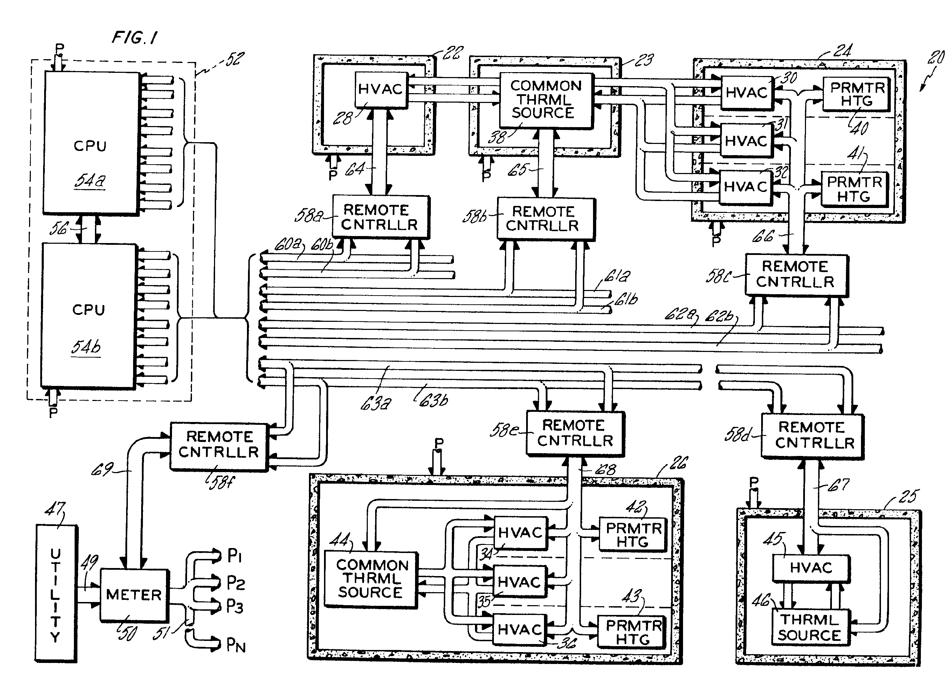

Referring now to Fig. 1, in a preferred embodiment of a supervisory control system according to the present invention, a facility 20 includes a plurality of buildings 22-26, or enclosures, each having living spaces in which the ambient temperature is regulated through the use of known HVAC type systems, supplemented in certain buildings by perimeter heating systems. The buildings are located at some distance from each other, and from a central control location in the facility. The facility layout may be representative of a university campus wherein a large number of buildings comprise the campus, each at significant distances from each other. Certain buildings are shown as having only a single HVAC, such as the building 22 including the HVAC 28, whereas the buildings 24, 25 represent larger buildings having multiple floors or zones which require a multiple number of HVACs, such as the HVACs 30-32 in the building 24, and the HVACs 34-36 in the building 25. The building 23 is illustrated as not including an HVAC system i.e. no living spaces, but rather represents a utility type structure enclosing a common thermal source 38 which provides chill water and steam or hot water to the HVAC network comprised of HVACs 28, and 30-32. In addition, the buildings 24, 25 further include perimeter heating systems 40, 41 and 42, 43 respectively, which as may be known provide supplemental heating to that provided by the HVACs in those living spaces within the buildings which are located along the perimeter and therefore subject to more severe environmental conditions due to the "cold wall effect". The building 25 further illustrates the use of a common thermal source 44 included within the building to provide the chill water and steam to the HVACs 34-36 within the building. Finally, the building 26 further illustrates another combination of a single HVAC system 45 being serviced by a dedicated thermal source 46.

The illustration of the facility 20 in Fig. 1 is intended only to show the various combinations of environmental conditioning systems, i.e. single HVAC systems, HVAC networks, and HVAC systems in combination with perimeter heating systems, which typifies the type of "patchwork" of environmental conditioning systems as may be found in a facility such as a university campus, or any other facility in which buildings have been added over a period to time, as required, without the benefit of planned growth, or common environmental conditioning systems. In addition the individual conditioning systems in each building vary as to the manufacturer, age and type of system. Generally all of the present conditioning systems known in the prior art include pneumatic control systems which are considered reliable, but which limit the ability to control such systems from a distance, or from a common central location due to the difficulty in establishing high integrity pneumatic control lines over any distance.

The facility 20 receives electrical power from an electrical utility 48 which, for simplicity of illustration is shown as being presented from the power utility to the facility through a common input line 49 and a watt meter apparatus 50, which measures and records the total electrical power usage in kilowatt hours (KWH) of the utility. As may be appreciated, certain facilities may receive electrical power input at several location, in which case a watt meter apparatus, such as the meter 50, would be installed at each location and the KWH reading of each would be summed to determine the total facility power usage.

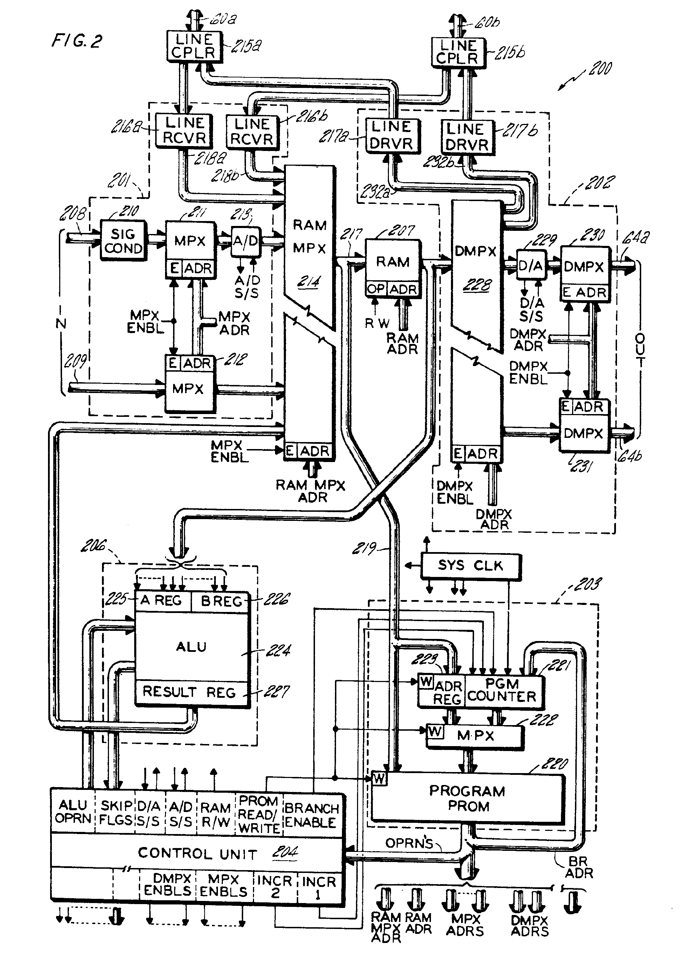

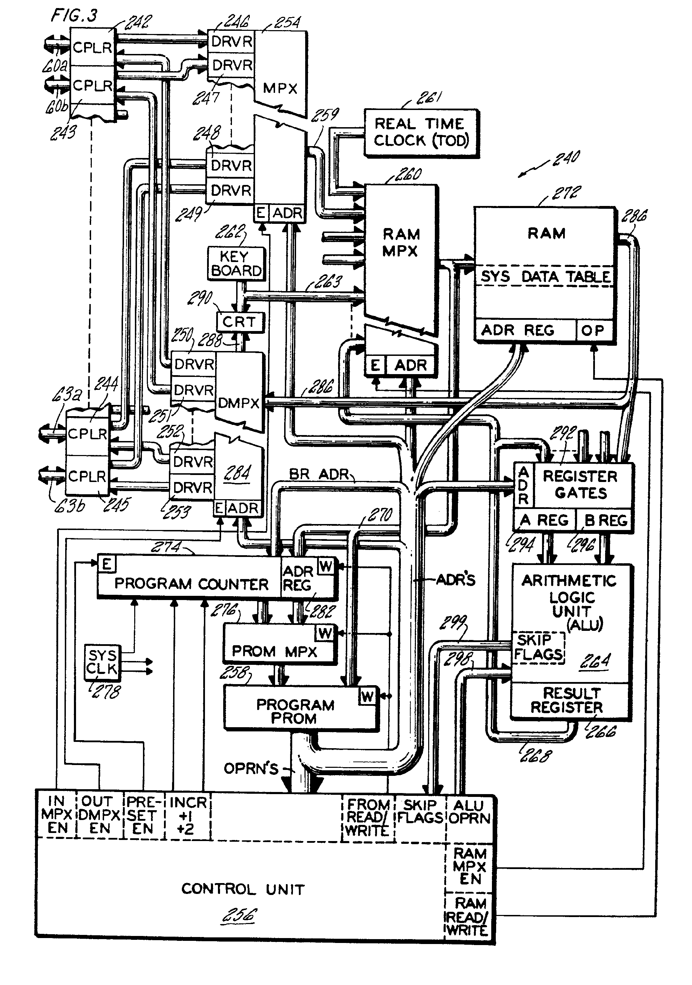

In the supervisory control system of the present invention, a central controller 52 includes a pair of central processing units (CPU) $54_a$, $54_b$, each identical

- 11 -

and each including a real time capability as described in detail hereinafter with respect to Fig. 3. The dual CPUs are interconnected to each other through a communication link provided by a trunk line 56 which allows transer of digital signal information between each. Each CPU having identical stored programming and each receiving identical input signal information, such that the two in combination provide complete redundancy of control capability within the central controller 52, i.e. either one is capable of providing full supervisor control functions at any one time. This redundancy of control capability is provided by connecting each to remote controllers $58_a$-$58_f$ through trunk line pairs 60-63. Each of the trunk lines (a, b) within the trunk pairs 60-63 are dual triaxial cables, each triaxial being a coaxial cable with an outer shield to provide protection. Each remote controller is associated with one of the buildings 22-26, and with the meter 50, and each includes a remote microprocessor (RMP) of a type known in the art as described in detail hereinafter with respect to Fig. 2. Each remote controller is connected to each of the triaxial cables in an associated one of the four pairs of trunk lines as described in detail with respect to Fig. 2. The RMP receives and transmits signal information to the CPUs through either one of the triax cables within the pair in dependence on a selection provided by the CPU through discrete command signals. The redundant triaxial cables are each capable of interconnecting the CPUs to over 30 remote controllers, if required, and although Fig. 1 illustrates only the pair 63 as having more than a single remote controller, each of the dual triaxial pairs are capable of the 30 remote controller hookup. Similarly, each of the cables is capable of transmission over a maximum distance of up to ten thousand feet without the use of active or passive repeaters within the lines.

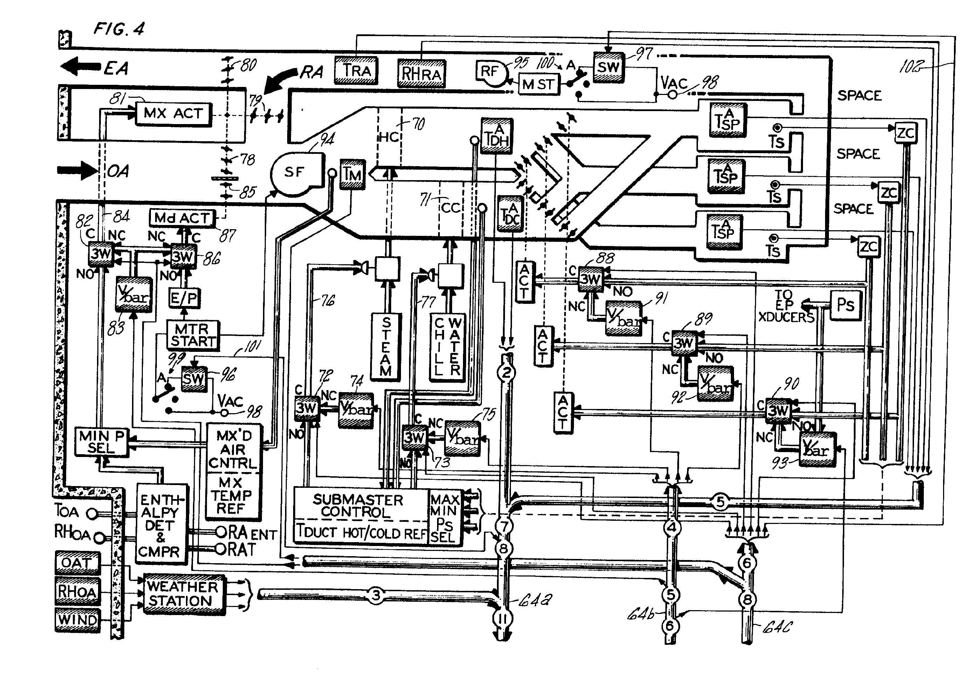

The remote controllers $58_a$-$58_e$ are connected to the various environmental conditioning systems within the buildings 22-26 through trunk lines 64-68, which provide interconnection between the RMP within each remote controller and the controlled devices within the associated conditioning systems. The remote controller $58_f$ is connected to the meter 50 through lines 69. The interface with each one of the respective HVAC, thermal source, and perimeter heating type systems is disclosed in detail in one or more of the hereinbefore referenced copending application, and is illustrated and described briefly herein with respect to Figs. 4-7, to provide completeness in the present description of a supervisory control system according to the present invention.

The interface between a remote controller, such as the controller $58_a$ and the HVAC system 28, is illustrated in Fig. 4. The HVAC system of Fig. 4 is assumed to be of the multi-zone type, well known in the art, and the detailed disclosure of the control functions over the HVAC operation provided in the hereinbefore cross referenced application Serial No. 78930001.9 is expressly incorporated by reference into the present application. The actual interface apparatus, both control and sensing apparatus, is described only briefly here. Referring to Fig. 4, in an HVAC pneumatic system the control interface between the remote controller $58_a$ and the HVAC 28 is provided by installing electropneumatic (EP) transducers in combination with three-way valves in the pneumatic control lines of the various HVAC system actuators and valves. The three-way valves are of a type known in the art, such as the Johnson Control Model V 24 and are selectably operable in one of two positions from a common (C) port to either a normally closed (NC) or a noramlly open (NO) port. Each valve is installed in the existing pneumatic control line in such a manner as to provide connection of the existing pneumatic line between the C and No ports, and the NC port is connected to the pneumatic output line of the EP transducer. The instantaneous position of the valve is determined by the energizing of a solenoid within the valve assembly with a typical energizing voltage of 24 volts AC, which is presented to the solenoid in response to the presence of a discrete energizing gate signal from the RMP within the remote controller. In the presence of a discrete signal at the input of the three-way valve, a pneumatic pressure signal path is provided between the NC and C ports, i.e. the output of the EP transducer and the input to the controlled device. This provided for a "fail-sage" operation since a failure in the RMP provides restoration of the three-way valve pneumatic signal path to the C and NO ports thereby restoring control to the existing HVAC system. The EP transducers are similarly of a type known in the art, such as the Hammeldahl Model T15. The transducers are charged from the system pressure source ($P_S$) to provide an operating pneumatic pressure signal in a typical range of 0-1,38 bar in response to an analog voltage signal from the remote controller RMP within a determined input analog voltage range.

As shown in Fig. 4, the HVAC heating coil 70 and cooling coil 71 are controlled by installation of three-way valves 72,73 and EP transducers 74, 75 in the heating and cooling coil pneumatic control line 76, 77. The HVAC mixed air dampers which incl[u]de the outside air (OA) damper 78, the return air (RA) dampers 79, and the exit air (EA) dampers 80, which are position controlled by a pneumatic actuator 81, are controlled by the remote controller $58_a$ through installation of a three-way valve 82 and EP transducer 83 in the control line 84 of the actuator. Similarly, the minimum dampers 85 are position controlled by the remote controller through installation of a three-way valve 86 in the control line of the minimum damper actuator 87.

For a multi-zone type system, where there is practical access to the actuators controlling the living space hot air, and cold air dampers, three-way vlaves in combination with EP transducers are similarly installed

- 14 -

to allow position control of the space dampers by the remote controller $58_a$, as shown in Fig. 4 through three-way valves 88-90 in combination with EP transducers 91-93. Each of the three-way valves is connected to the RMP within the remote controller through a discrete signal line which allows for the RMP energizing of the solenoid within the valve. Similarly, the EP transducers receive analog input signals from the RMP through an associated analog signal input line. The remote controller receives sensed signal parameters including the actual living space temperatures, outside air temperatures and hot and cold deck discharge temperature, in addition to outside air wind and relative humidity, the various sensors being illustrated in Fig. 4 and described in detail with respect to Fig. 1 of the Serial No. 78930001.9 Games et al application which, as stated hereinbefore, is expressly incorporated by reference into the present application.

Referring still to Fig. 4, further interface is provided between the remote controller $58_a$ and the HVAC supply fan 94 and return air fan (if included in the system) 95 through the use of voltage controlled switches 96, 97 respectively. The voltage controlled switches are selectably operable, and are of a type known in the art which provide electrical interconnection between a voltage source 98, and an automatic (A) contact on each of two manually operated switches 99, 100 associated with the supply fan 94 and return air fan 95, in response to discrete gate signal presented to a gate input of each on the lines 101, 102 from the remote controller $58_a$. The signals presented to the various three-way valves, EP transducers, and voltage controlled switches, in addition to the sensed signal parameters presented from the various temperature, wind, and relative humidity sensors, are presented to the remote controller through sub-trunk lines $64_a$-$64_c$, included within the trunk line 64 of Fig. 1.

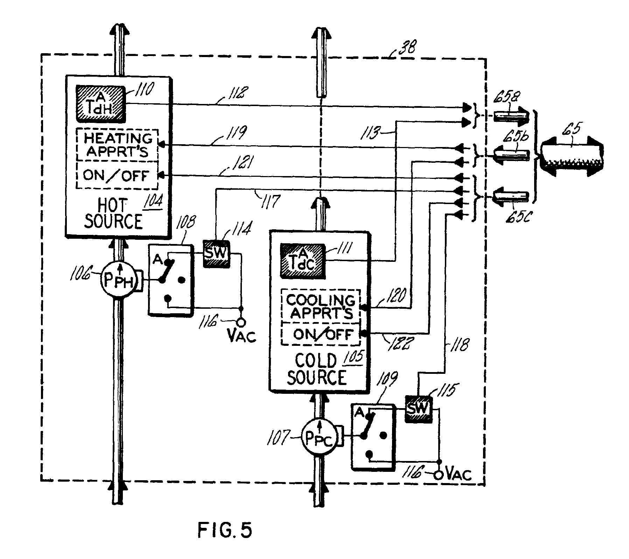

The remote controller $58_b$ is interfaced with the common thermal source 38 in a manner illustrated schematically in Fig. 5, and described in detail in the hereinbefore referenced, copending application to Healey et al, and the detailed description provided in the Healey et al application is expressly incorporated by reference in the present application. Referring now to Fig. 5, the common thermal source 38 includes a hot source 104 and cold source 105, each having associated primary pumps 106, 107. The pumps are energized through manually operable switch assemblies 108, 109 which allows selectable operation of the pumps, i.e. shutdown of the pumps for repair, maintenance, or seasonal shutdown. The interface apparatus includes installation of temperature sensors 110, 111 in the hot source and cold source respectively, each providing an actual discharge temperature signal from the respective sources on lines 112, 113. Voltage controlled switches 114, 115 are interconnected between a source of AC voltage 116 and an automatic (A) contact on each of the manually operable switches 108, 109. The voltage controlled switches are identical to the switches 96, 97 described in Fig. 4, and provide electrical connection of the source to the A contact in response to discrete gate signals presented, to gate inputs thereof, through lines 117, 118 included in the trunk line 65 from the remote controller $58_b$. As described in the referenced application to Healey et al, the interface between the remote controller $58_b$ and each of the hot and cold sources is dependent on the particular type of hot and cold source included in the system, i.e. the hot source may use any number of known methods of heating hot water to the desired discharge temperature, such as steam heating or through the use of electrical or fossil fuel fired heaters, and the cold source may be a chiller of any one of a number of basic types, such as a steam absorption type, an electrical centrifugal chiller, or an electrical reciprocating chiller, with the control and sensing apparatus differing with each. In all cases, the heating and cooling apparatus used in the hot and cold sources are of a type well known in the art, such that the final interface may be provided through well known techniques and with apparatus known in the art. The illustration of Fig. 5 represents only a generic, or block diagram illustration of the interface, which includes both linear control of the apparatus operation provided through analog signal inputs presented from the remote controller $58_b$ on lines 119, 120, and discrete on/off signals provided on lines 121, 122.

The common thermal source 38 provides both hot and cold fluid medium, such as chill water and hot water to each of the HVAC systems 28, and 30-32 which in combination comprise an HVAC network. The referenced application to Healey et al discloses and claims that optimization control function for controlling the discharge temperature of both the hot and cold source to the lowest permissable value in dependence on the highest hot and cold loads in the network. Fig. 5 is included herein only to illustrate the interface connections between the remote controller $58_b$ and the common thermal source 38, as part of an overall central supervisory control system.

Referring again to Fig. 1, the buildings 24, 26 each include some number of HVAC systems which are used in combination with perimeter heating systems in the perimeter living spaces in each building. The remote controllers $58_c$, $58_e$ are interfaced with each of the HVAC and perimeter heating systems included in the associated buildings. The hereinbefore reference, copending application Serial No. 78930006.8

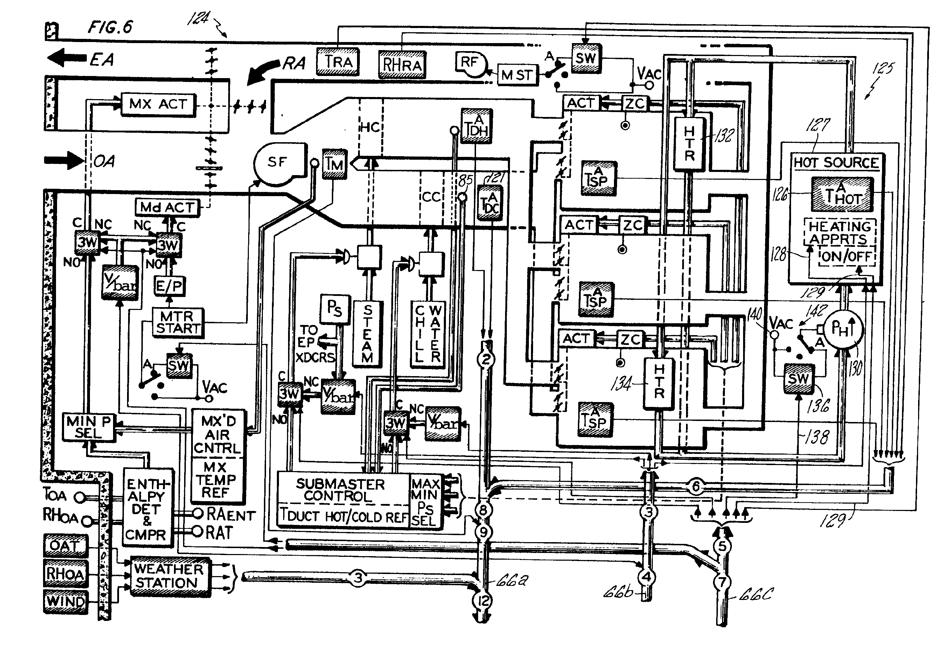

disclose in detail the interface connection between the RMP included within the associated remote controller, and the combined HVAC and perimeter heating system servicing those perimeter living spaces in the building, and the detailed disclosure included therein is expressly incorporated by reference into the present application. Referring now to Fig. 6, in an illustration of a dual-duct type of HVAC system 124 together with a perimeter heating system 125, the interface with the dual-duct HVAC is identical to that described hereinbefore with respect to Fig. 4, with the exception that no interface apparatus is provided to control the position of the space dampers, since in a dual-duct type of system the dampers are located within the individual spaces rather than in close proximity to the heating and cooling apparatus, such that control over the space damper position is impractical. Control interface with the perimeter heating (PH) system 125 includes the addition of a discharge temperature sensor 126 in the hot source 127 of the PH system, which provides an actual hot water discharge temperature signal. The interface apparatus for controlling the modulation of the discharge temperature from the hot source is again dependent on the type of hot source included, as described hereinbefore with respect to the common thermal source 38 of Fig. 5. As such, the interface is of a generic type which simply shows the interconnecting lines from the RMP within the remote controller, and includes an analog signal line 128 for modulating the heating apparatus output and a discrete line 129 for controlline the on/off status of the heating apparatus. As described in the Games et al application, the PH system pump 130 forces the hot water from the source 127 through the network of perimeter space heaters 132, 134, and is interfaced with the RMP through a voltage controlled switch 136, identical to the voltage controlled switches described hereinbefore with respect to Figs. 4, 5, which respond to discrete gate signals presented at a gate input thereof from the RMP on a line 138, to provide electrical interconnection between a source of AC voltage 140 and an automatic (A) contact on a manually operable switch 142, to provide actuation of the pump 130.

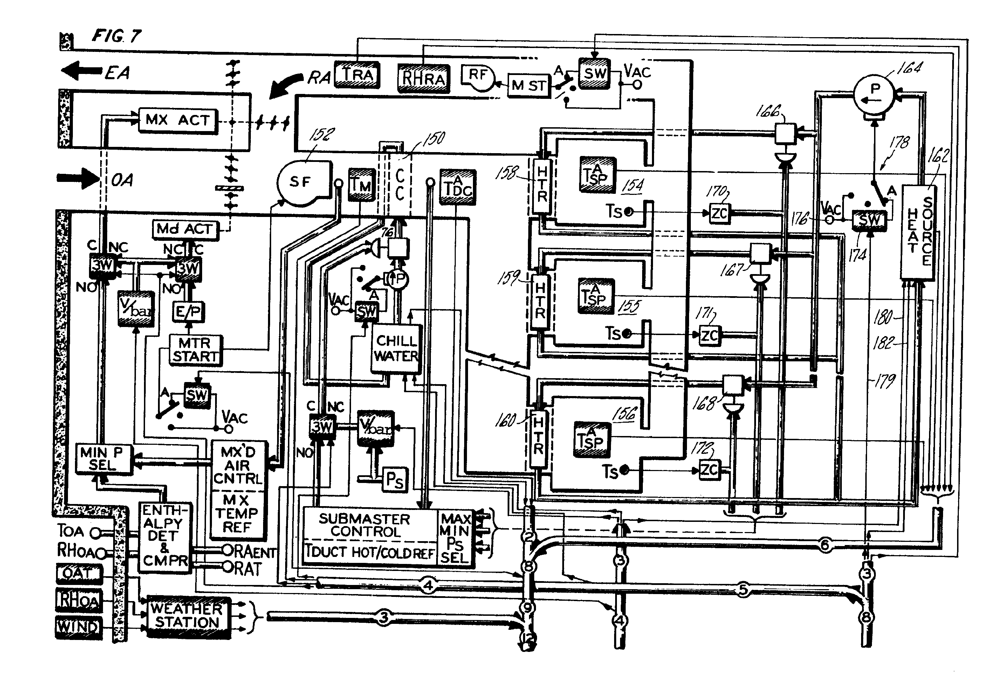

The remote controller $58_d$ is connected through the trunk line to the HVAC 45 within the building 25. For the purposes of illustrating the variations in environmental conditioning system types, the HVAC 45 is assumed to be of a terminal reheat type system having a dedicated thermal source 46 associated therewith. Fig. 7 illustrates a terminal reheat type of HVAC system known in the art, and the central control of the operation of the terminal reheat system in addition to the interface apparatus is fully disclosed in detail in the hereinbefore referenced, copending application to Bitterli et al which is expressly incorporated by reference into the present application. As shown in Fig. 7, the terminal reheat HVAC includes a cooling coil 150 which conditions air driven in heat exchange relationship therewith by a supply fan 152 from the mixed air damper assemblies of the HVAC. The interface between the remote controller $58_d$ and the cooling coil, supply fan and mixed air dampers are identical to that described hereinbefore with respect to Fig. 4, and the interface apparatus is similarly identical, i.e. the use of three-way valves in combination with EP transducers to provide the electrical-to-pneumatic interface between the remote controller and the corresponding control devices within the HVAC. The terminal reheat type HVAC of Fig. 7 differs from the multi-zone HVAC described hereinbefore with respect to Fig. 4, in that no hot deck is provided, but rather the cool discharge air from the cooling coil 150 is heated prior to discharge into the individual living spaces 154-156 through terminal reheaters 158-160 disposed within the inlet duct to each space. The heaters are presented with a hot fluid flow, such as hot water from a hot source 162 through a pump 164, and the flow to each terminal reheater is controlled through pneumatic valves 166-168 in response to pneumatic temperature error signals provided from associated zone controllers 170-172.

As described in the Bitterli et al application, the control of a terminal reheat system is particularly difficult since access to the individual pneumatic valves 166-168 is impractical, however, as described by Bitterli the supervisory control of the terminal reheat function includes interface with the heat source 162 and pump 164. The control function providing selective actuation of each in response to sensed temperature conditions within the living spaces. As shown in Fig. 7, the pump 164 is interfaced through installation of a voltage controlled switch 174, identical to those voltage controlled switches described hereinbefore with respect to Figs. 4, 5, and 6, which is interconnected between a source of AC voltage 176 and an automatic (A) contact on a manually operable switch 178, and is responsive to gate signals presented to a gate input thereof from the RMP on a line 179. The interconnection between the RMP of the remote controller $58_d$ and the heat source 162 is provided in an identical manner to that described hereinbefore with respect to the hot source of the PH system of Fig. 6, and the common thermal source 38 of Fig. 5. The remote controller $58_d$ provides the source 162 with analog signals on a line 180 and discrete signals on a line 182, to control modulation of the source discharge temperature and discrete switching of the on/off state of the source respectively.

Referring again to Fig. 1, as stated hereinbefore the total supervisory control system includes the central control 52 having redundant CPU capability in combination with a plurality of remote controllers, each including an RMP, and each associated with a building in the facility located at some distance from the central control. The RMP in each remote controller provides signal conditioning and analog-to-digital transformation of the analog sensed signals, storage of the sensed signal values in a random access memory (RAM) of the RMP between update intervals, and a readout of a selected one, or all, of the stored parameter values to the central control CPU upon request. The RMP provides front end data processing and interim storage of the sensed parameter values, in addition to providing direct control of the various dampers and valves within the respective HVAC, perimeter heating system, and thermal sources. The RMPs allow for a freeing up of the CPU total overhead time which reduces the actual computer time required to service each of the buildings, thereby allowing the CPU to accommodate a larger number of building than would otherwise be allowed. The CPU performs the outer loop control functions for each of the environmental conditioning systems, while the RMP associated with the particular system provides an inner loop control, i.e. the closed loop control of the valves, dampers, etc. associated with each of the combination of the CPU and RMPs provide a hierarchy control system which permits total dynamic control over the operation of each of the individual environmental conditioning systems within the facility.

Referring now to Fig. 2, each of the remote controller $58_a$-$58_f$ includes an RMP 200 which is illustrated as having the architecture of a typical digital microprocessor system. The RMP is a combination of basic microprocessor elements including: input, output sections 201, 202 for receiving and transmitting data to associated environmental conditioning systems (ECS), such as the HVAC and PH systems, and to the CPU $54_a$, $54_b$; a main memory section 203 for providing programmed instructions for the RMP through operand address programming; a control unit 204 for providing program control over RMP operation sequencing; an arithmetic unit 206 for providing the operational add, subtract, multiply, and divide functions of the RMP; and a random access memory (RAM) 207 for providing memory storage of the interim and final result outputs from the arithmetic unit 206, and for all signal information from the input section 201, including sensed ECS data and CPU instruction commands.

The input section 201 receives the analog sensed signals from the HVAC and PH systems on the trunk line 208, in addition to any discrete signals from the systems, such as temperature alarm units and pneumatic line $\Delta P$ limits, on a line 209. The analog signals on the line 208 are presented through signal conditioners 210 to the input of a multiplexer (MPX) 211 and the discrete signals on lines 209 are presented to the input of an MPX 212, both MPXs being under program control from the programmable memory 203. The output of the MPX 211 is presented to an analog-to-digital (A/D) converter 213 which exchanges start/stop commands with the control unit 204. The output of the A/D 213 and MPX 212 are presented, together with the output of the arithmetic unit 206, to inputs of an RAM MPX 214. The RMP also receives signal information presented from the CPUs $54_a$, $54_b$ on an associated one of the pairs of triaxial trunk lines 60-63, such as the triaxial pair $60_a$, $60_b$, each of which is connected to the RMP through line coupling networks $215_a$, $215_b$. The line coupling networks are of a type known in the art employing standard current loop coupling techniques to provide for transfer of signal information in both directions between the CPUs $54_a$, $54_b$ and the RMP over each of the lines in the pair. Each coupling network $215_a$, $215_b$, is connected to an associated one of two line receivers $216_a$, $216_b$, and two line drivers $217_a$, $217_b$. Signal information from the CPUs $54_a$, $54_b$ presented on either one of the triaxial lines $60_a$, $60_b$ is presented by the receivers $216_a$, $216_b$ through lines $218_a$, $218_b$ to inputs of the RAM MPX 214. The MPX 214 scans each of the input lines under a RAM MPX program address from memory 203 on command of MPX strobes generated by the control unit 204, and presents the information at each input through lines 219 to the RAM 207, which stores it in a memory location defined by the RAM address programming from the main memory. In addition, the output from the MPX 214 on the lines 219 is presented to the input of the main memory 203 to provide, under command of a program subroutine, access by the CPU to the main memory 203 for reprogramming the RMP operational instructions stored in the main memory.

The main memory section 203 includes a programmable read only memory (PROM) 220 normally responsive to the output of a program counter 221 presented through an MPX 222. The PROM 220 may actually comprise a read/write memory so as to be alternatively responsive to CPU interrupt or reprogramming instructions presented on the lines 218 to another input of the PROM 220 and to an address register 223, connected through the MPX 222. The PROM 220 provides operand address programming for the RAM MPX 214, the RAM 207 address, and the program address for the multiplexers and demultiplexers (MPX, DMPX) of the input and output sections 201, 202. In addition the PROM 220 provides the operand addressing to the control unit 204 and the branch address to the program counter 221.

The arithmetic unit 206 includes an arithmetic logic unit (ALU) 224 which performs the selected mathematical function on the data presented from the RAM 207 through the operating A and B registers 225, 226. The result of the ALU operation is presented through a result register 227 to the input of the RAM MPX 214. The ALU operation (add, subtract, multiply, or divide) is selected by the control unit 204, and the RAM operand address, which controls the data presented to the ALU from the RAM, is provided from the PROM. As may be required, SKIP FLAGS are generated by the ALU and presented to the control unit to provide PROM skip instructions as may be necessary during the particular mathematical operation being performed. The result data stored in the RAM 207 is presented to the CPU and to the associated ECS (on CPU request or PROM 220 program command) through a demultiplexer (DMPX) 228 which, under program control from the PROM 220 presents the ECS analog signals, i.e. the input signals to the EP transducers of Figs. 4, 6, 7, through a digital-to-analog converter (D/A) 229 and DMPX 230 to lines within an associated one of the interconnecting trunk lines (64-69 of Fig. 1), such as $64_a$ of lines 64, the ECS discrete signals through a DMPX 231 to lines $64_b$ within the trunk line 64, and the data output to the CPU through lines $232_a$, $232_b$ to line drivers $217_a$, $217_b$. Both DMPXs 230, 231 are under program control from the PROM 220 and the D/A 229 exchanges start-stop strobes with the control unit 204.

In operation, as known to those skilled in the art, the MPX 214 reads all of the input data to the RMP 200 into the RAM 207 where it is stored at address locations determined by a RAM address program from PROM 220. The PROM scans and identifies all data entries to the RAM, both sensed ECS parameter information and inputs from the CPU, by ordering both stored data and stored control character code information from the RAM 207 into the A and B registers 225, 226 of the arithmetic unit 206. A PROM program subroutine then sequentially compares identifying characters contained within selected bytes of the information word with each of a plurality of identifying characters within the character code until the information word is identified. Depending upon the identification of the information word, the program may branch to various addresses as determined from the PROM 220 and the word may be returned to the same location in RAM or changed to a different address location. This may be accomplished through SKIP FLAGS dependent on results in the ALU 224 and presented to the control unit 204. A SKIP FLAG causes the program counter to increment two steps, such as to bypass a branch instruction; no SKIP FLAG causes an increment of one, allowing execution of the next sequential instruction (operational or branch). Use of various branch instructions enables the program to unconditionally branch to an address stored in PROM 220, to call up various subroutines as required for the program operation during normal running of the RMP.

The RMP includes a subroutine for identifying CPU program change instructions, wherein a first word from the CPU is presented through the MPX 214 into a RAM 207 memory location determined by the address program. The word is identified by the normal PROM scanning of the stored RAM data through the subroutine described hereinbefore. When identified as a CPU instruction, a PROM write strobe from the control unit 204 is presented to the address register 223 allowing entry into the register of the next word from the CPU appearing on the line 219 and containing the desired address location in PROM 220 of the new CPU instruction. A third word from the CPU, containing the instruction change information, is presented from the lines 219 to the input of the PROM 220 simultaneously with the presentation of a second PROM write strobe from the control unit 204 to the MPX 222 which allows the PROM 220 to read the address location stored in the register 223 together with the instruction word appearing at the input on the line 219. In this manner operating program instructions stored in the PROM 220 may be altered by CPU command. Similarly the values of operating constants for the inner loop control of the ECS, which are stored in the RAM 207, may similarly be changed on CPU instruction which orders the PROM 220 to pull out the appropriate constant stored in the RAM 207 and read in the new value of the constant from the CPU.

The RMP 200 is free running, i.e. asynchronous with the CPU, and scans the sensed analog and discrete input signals from the input section 201 at a rate typically ten times greater than that required by the CPU, i.e. typically the CPU receives data from the RMP every 10 seconds, and the RMP scans all of the data input lines and closes each of the proportional gain inner control loops every one second. The normal free running scan of the sensed parameters is interrupted for communication with the CPU, for both program change commands and commands for data readout from the RAM 207. The interrupt time represents approximately 5% of the total RMP running time. The CPU also interrupts the RMP to provide loading of CPU calculated temperature reference values into the RAM 207, to command the RMP 200 to provide comparison of the duct reference temperature with the stored sensed temperature values, and to generate the resultant error control signal to the appropriate valves and damper actuators within the HVAC and PH systems. The control procedures for the RMP 200 is stored in the PROM 220 while the RAM stores both the sensed data and control character code subroutine information, in addition to providing scratch pad storage for the arithmetic unot 206. Similarly, specific data acquisition software, i.e. unique configuration tables for a specific control loop is loaded from the CPU and is stored in the RAM. Memory capacity for the RMP is typically 2K words of PROM and 4K words of RAM. In addition to providing the data acquisition from the HVAC system sensors and proportional inner loop control of the ECS controlled devices, i.e. valves, dampers, the RMP also provides a program shutdown routine stored in the PROM 220 for relinquishing control from the CPU to the existing ECS controller, i.e. the HVAC and PH systems site control loops. It should be understood that the RMP of Fig. 2 is illustrative of one configuration of a dedicated microprocessor system suitable for providing the data acquisition and front end processing of data for the CPU, and the specific architecture is dependent on a given particular implementation of the present invention and forms no part of this invention. Similarly, any suitable general purpose microprocessor known in the art and having the requisite characteristics, such as the industry standard model 8080A, may be used if desired with standard programming techniques.

- 26 -

Referring now to Fig. 3, a CPU which may incorporate the central control function of the present invention provided by CPUs $54_a$, $54_b$ is illustrated as representing the architecture of a typical, real time data processing system 240. Each of the triaxial lines (a, b) in each of the pairs of lines 60-63 of Fig. 1 from each of the remote controller RMPs, such as the RMP 200 of Fig. 2, are presented through line coupling networks identical to the couplers $215_a$, $215_b$ of Fig. 2, as illustrated by the lines $60_a$, $60_b$ connected to coupling networks 242-245. Each of the coupling networks 242-245 are connected to an associated one of line receivers 246-249, and line drivers 250-253. The output of each of the receivers 246-249 is connected to a corresponding one of a plurality of inputs of an MPX 254 which, when enabled by a strobe from a control unit 256, sequentially scans the input lines under address program control of a programmable read only memory (PROM) 258. Each of the input data signals are presented in turn through lines 259 to one input of a RAM MPX 260 which scans a plurality of RAM input data lines including: the output of from a real time clock 261 which provides the time of day (TOD) with a timekeeping capability ranging from seconds to years, the output of a keyboard 262 presented through lines 263, and the output of an arithmetic logic unit (ALU) 264 presented through a result register 266 and a set of lines 268. The RAM MPX 260 scans each of the input lines when enabled by a strobe from the control unit 256 under address control from the PROM 258, and presents the selected input data lines through a set of lines 270 to the input of a RAM 272 and to a write input of the PROM 258. The RAM 272 is similarly under an address program control from the PROM 258 and receives an operational code strobe (RAM READ/WRITE) from the control unit 256.

The control unit 256 responds to command inputs from the PROM 258 which in turn is under control of a program counter 274 presented through a PROM MPX 276. The program counter 274 receives the output of a system clock 278 which provides the CPU operating time base. The program counter 274 is also responsive to pre-set enable, and increment one, and increment two strobes from the control 256. The PROM MPX 276 is responsive to read/write control signals from the control unit 256 to present either the output of the program counter 274, or alternatively the output of an address register 282 to the input of the PROM 258. The address register 282 receives the output of the RAM MPX 260 on the lines 270 and is used in conjunction with a subroutine similar to that described hereinbefore with respect to the RMP 200 of Fig. 2, to provide reprogramming of the PROM 258 through keyboard 262 entry by a maintenance operator.

In addition to providing the address programming for the MPXs 254, 260 and the RAM 272, the PROM 258 also provides operational address programming for a demultiplexer (DMPX) 284 which presents the output from the RAM 272 on lines 286 to a plurality of output lines including lines 288 to a video display (CRT) 290, which provides visual display of input information presented through the keyboard 262 by the operator and output data presented to the RMP from the CPU, and through lines to each of the line drivers 250-253. The PROM 258 also provides the branch address to the program counter 274 and program address information to address register gates 292 which control the data flow into the A and B registers 294, 296 of the ALU 264.

The stored program within the PROM 258 is implemented through the control unit 256 which provides enabling strobes for the CPU multiplexers and demultiplexers in addition to providing operative read/write instructions to the RAM 272 and operation instructions (arithmetic, logic, compare, etc.) to the arithmetic unit 264 on lines 298. The control unit 256 receives instruction inputs to alter the PROM sequency from SKIP FLAGS generated in the ALU 264 and presented on the lines 299.

The real time data processing system of Fig. 3 represents one configuration of a dedicated hardware, real time data processing apparatus which may be advantageous for use in implementing the control system of the present invention where general prupose programming is neither required nor practical in view of the control functions to be performed. It should be understood, however, that the specific architecture is dependent on the particular implementation of the present invention, and forms no part of the present invention. If it is deemed necessary, or practical, any one of a number of well known processing systems may be used as may be obvious, or readily apparent, to those skilled in the art. As is more apparent in the light of detailed operational descriptions provided hereinafter, well known processing systems such as the Digital Equipment Corporation Model PDP 1135 or 1140 general purpose computers used in combination with real time operating software such as the Digital Equipment Corporation RSX-11M real time software system, employing only programs provided through programming techniques well known in the art, may be utilized in conjunction with the remote microprocessor and the HVAC sensors and interface control equipment described hereinbefore.

The remote controller $58_f$ receives input signal information representative of the instantaneous power usage in kilowatt hours (KWH) of the facility provided by the watt meter apparatus 50 through the trunk line 69. The metering apparatus may be any one of a number of well known types, which are used by the electric utility companies to measure total electrical energy usage by their customers. In a typical supervisory control system, the utility company permits interconnection of the supervisory control with the metering apparatus such that the supervisory control receives signal information representative of the instantaneous power usage. The typical watt meter output is in the form of a series of pulses, i.e. a pulse train, each pulse representing a quantum of power usage in kilowatt hours (KWH) which is consumed energy. The utility bills each consumer (facility) on the total energy in KWH consumed within a billing period, typically a month and which is known as the monthly base rate usage. In addition to payment for the monthly base rate usage at a determined rate per KWH, the utility further bills the consumer based on the highest average power demand in kilowatts (KW) incurred within the billing period. Typically the consumer sets a monthly demand limit (MDL) in KW at a value predicted as the highest average power demand which will be requested by him within the billing period and is billed for power demand on the MDL. The utility monitors the usage over demand time intervals within the billing period and imposes further penalty payments for peak average power demands which exceed the MDL within a demand interval. The penalty provisions for peak KW demands in excess of the MDL may range into the dollars per KWH for that amount of energy in excess of the MDL. Furthermore, certain utilities invoke a "ratchet provision" whereby the facility is penalized at the higher peak rate for some number of months following the occurrence of the peak, despite subsequent monthly usage below the MDL. These severe penalties are considered necessary by the utilities to limit the peak demand on the generating facilities, and allow the utility to efficiently plan total output requirements. For the consumer the penalty provisions result in a substantial overhead cost above that required for normal operation of the facility. The supervisory control system of the present invention provides for both a reduction in the total monthly power usage, in addition to protecting against occurrence of average power demands (KW) above the MDL for a determined interval, which result in a substantial reduction in electrical energy costs and a reduction in total demand charges.

The reduction in total monthly usage is provided by a load cycle function executed by the CPU ($54_a$, $54_b$). The load cycle function is typical of that presently provided in the prior art, wherein duty cycles are established for certain selected environmental conditioning apparatus from among the total numbers of environmental conditioning systems in the facility. Each duty cycle is defined by prescribed on times and off times, the off times having a minimum and a maximum value. The specific apparatus to be cycled is determined from the requirements of a given facility with a determined priority established for the cycled apparatus, i.e. the least significant apparatus having the least priority and therefore the potentially the highest cycled off times, or frequency. The selected equipment which may be subjected to the cycling schedule is listed in a LOAD CYCLE TABLE within the CPU RAM (272, Fig. 3). The load cycle table lists the rated power consumption of each piece of equipment in the table and the sum of the rated power consumption represents a percentage of the average monthly power usage of the facility. This total load cycle table power summation varies with the number, and types of equipment selected for cycling, such that the total percentage power load represented by the listed equipment similarly varies in dependence on the selection. Typically the percentage is on the order of 25% of the average monthly usage of the facility, although as may be appreciated, there may be a substantial tolerance around this typical value.

The protection against peak average KW demand in excess of the MDL for any interval, as provided by the present supervisory control syste is referred to as a redline control function. This redline function protects against the MDL by constantly monitoring, and storing in the remote controller $58_f$ the total power usage in KWH over a given time interval as provided by the watt meter 50, and by converting the total interval usage values into average power demand (KW) values for each demand interval within which the total facility power usage is monitored by the utility. The redline function includes a prediction of the average power demand within each interval based on present and past calculated values of predicted total power within the interval, thereby permitting sufficient time to take corrective action in shedding (turning
off) certain selected equipment, and reducing the average
electrical load within an interval to avoid a peak average
power demand in excess of the MDL.

A REDLINE TABLE within the CPU RAM (272, Fig. 3)
is of the form:

| BUILDING | SYSTEM | EQUIP. | KW | TURN ON TIME | TURN OFF TIME |
|---|---|---|---|---|---|
| 24 | HVAC 31 | SF | $P_1$ | XX:XX | YY:YY |
| 26 | HVAC 35 | SF | $P_2$ | . | . |
| 22 | HVAC 28 | SF | . | . | . |
| . | . | . | . | . | . |
| . | . | . | . | . | . |
| . | . | . | . | . | . |
| 23 | SOURCE 38 | PUMP 106 | $P_N$ | XX:XX | YY:YY |

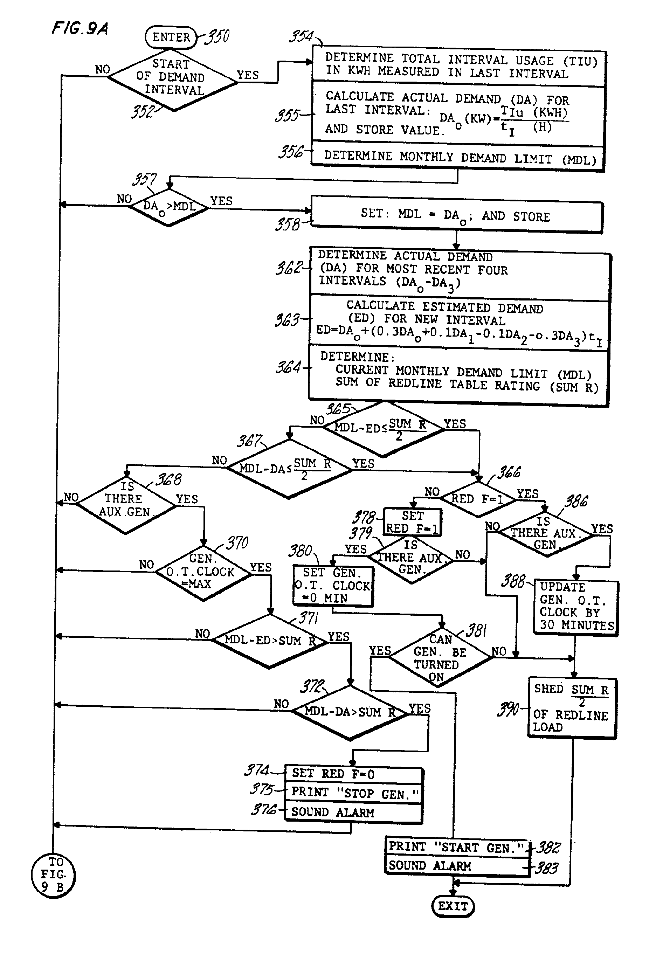

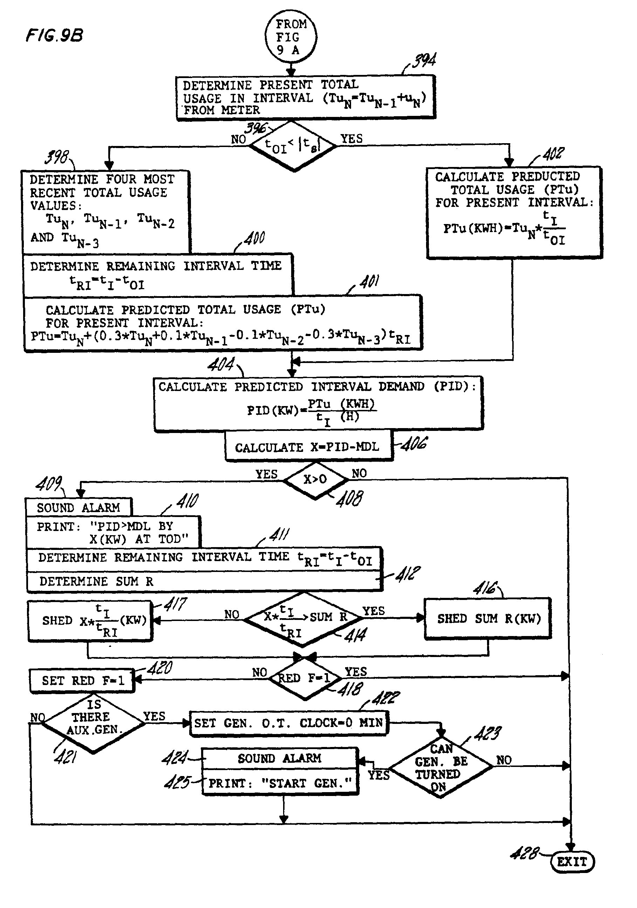

The table includes a listing of selected environmental
conditioning equipment which is different from that listed
in the load cycle table, and which is not subject to the
load cycling control. Rather, the equipment listed in
the redline table represents higher priority equipment than
that in the load cycle table, which from the standpoint
of facility requirements is preferred to be left on continuously, but which is available for shutdown in the event
of the occurrence of an extraordinary condition of limiting the peak average power demand within a demand interval,
to a value below the MDL. In the event of a predicted
average power demand in excess of the MDL, the CPU in combination with the associated RMPs provide a shutdown of
all, or part of, the equipment listed in the REDLINE TABLE
in a determined priority order from the least priority to
the highest priority system listed. The operation of the
redline function is described in detail hereinafter with
respect to Figs. 9A, 9B.

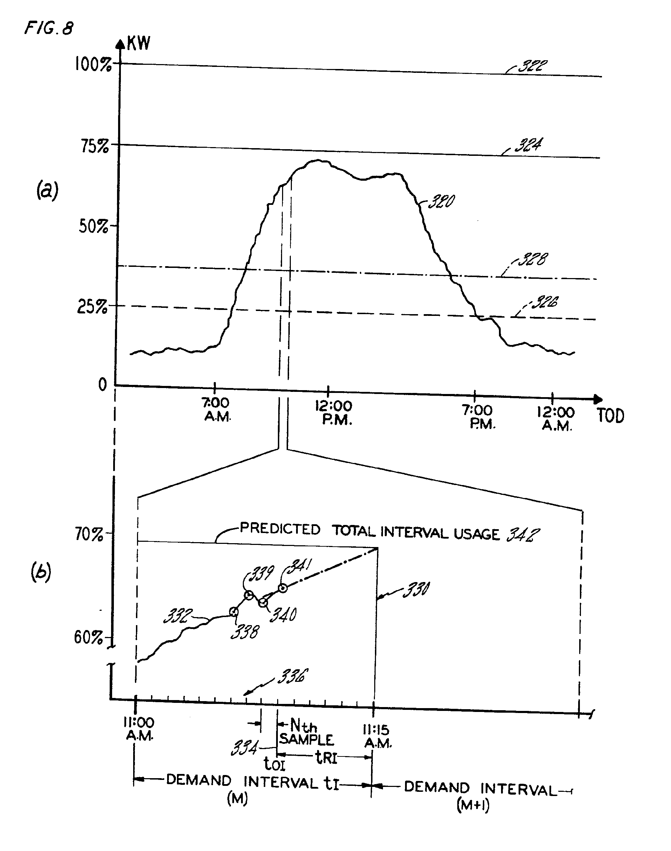

Referring first to Fig. 8 illustration (a), a curve
320 illustrates a typical facility average power demand in
KW plotted against the time of day (TOD). As shown the
peak demand typically occurs at midday between the hours
of 7:00 a.m. and 7:00 p.m. A line 322 represents 100% of the average power demand capability of all of the environmental conditioning equipment associated with the facility, and a line 324 represents an MDL established by the facility as the peak limit of any average power demand within any demand interval of the billing period, and which is presently assumed to be approximately 75% of the total power demand capability. The total summation of the power ratings of the various conditioning system equipment listed in the load cycle table is illustrated by the dashed line 326 as having a total load shed capability equal to approximately 25% of the total power demand curve 322. In addition, the summation of the redline table power ratings $(P_1 + P_2 + \cdots P_N = SUM\ R)$ is illustrated as having a total power capacity equal to the difference between the dashed line 326 and a phantom line 328, or typically one half the load cycle sum, which when added to the power rating of the load cycle table results in a total load shed capacity equal to approximately 38% of the total power demand curve 322. The percentage of total power demand included within each of the load cycle and redline tables is only typical, however, the summation of the ratings in the combined tables should be greater than the power demand differential between the MDL and the total power demand capacity (322) to ensure the ability to limit the peak demand to less than the MDL.

The electric utility monitors the facility's average power demand in demand intervals of time, each interval being designated by a start and stop sync pulse provided from the meter (50 of Fig. 1). In general, the demand intervals are of fixed time duration and are successive, such that a present demand interval is immediately followed by a next succeeding demand interval, each synched to a present time of day (TOD) as shown in Fig. 8 illustration (b). In some cases, a utility provides a "sliding" demand interval, which starts at any time selected at random by the utility. In each case the start/stop pulses which define the interval are monitored by the remote controller ($58_f$ of Fig. 1) and transmitted to the CPUs $54_a$, $54_b$. The demand interval time duration $(t_I)$ varies with utilities, and is typically 15 to 30 minutes as established by the utility. As shown in illustration (b) the fixed demand interval (M) 330 has a total time $t_I$. The curve 332 represents the power usage within the interval up to a present time of the interval $(t_{OI})$ 334. As described hereinafter, the controller $58_f$ samples the power usage at determined sample rate 336 to determine the four most recent total usage values 338-341 and predict a total usage value 342 for the interval based on the remaining time $(t_{RI})$. The controller $58_f$ monitors the total power usage as provided by the meter 50, at prescribed sample periods at typical one minute intervals, and the CPU executes a program routine to determine an average power demand value for the demand interval, in response to each sampled value of total usage.

Referring now to Fig. 9A, the CPU enters the redline flowchart at 350 and instructions 352 request a determination of whether the present TOD as provided by the real time clock (261 of Fig. 3) is presently at the start of a demand interval. If YES, instructions 354 request the total interval usage $(T_{IU})$ in KWH as determined from the meter (50 of Fig. 1) for the most recent demand interval. Instructions 355 request a calculation of the actual average demand for the last demand interval

$(DA_0)$, from the expression $DA_0 \text{ (KW)} = \dfrac{T_{IU\,(KW)}}{t_{I\,(H)}}$ , where

$t_I$ is the total incremental time for the demand interval. Instructions 356 request a determination of the MDL, and instructions 357 request a comparison of the calculated $DA_0$ with the MDL. If the actual average demand exceeds the MDL, instructions 358 request a new MDL value equal to the calculated actual average demand and request the new MDL value be stored in the CPU RAM (272, Fig. 3). Instructions 354-358 provide an update of the MDL in the event that the prior value was exceeded by a peak average power demand for the interval. This reset is necessary to ensure that the redline functions is controlled to the highest average demand incurred within a demand interval since payment is based on the peak average value.

Instructions 362 request the actual average demand values for the four most recent demand intervals, which are stored in the CPU RAM. Instructions 363 next request the calculation of an estimated demand (ED) for the new demand interval which has just begun. The estimated demand is a coarse value provided through a linear regression technique, similar to the least squares technique known in the art for providing curve fitting to sampled data values. The present linear regression technique differs in that a straight line prediction of prospective average power demand for an interval is provided from the four most recent sampled values. The derivation of the expression for ED, in addition to the values of the weighting coefficients, is shown in appendix A of the present specification. Instructions 364 request a determination of the current MDL and summation of redline table ratings (SUM R), and instructions 365 determine whether the difference between the MDL and the ED value is less than or equal to one-half of the redline table rating. If YES, indicating that the estimated average demand value is close to the MD, such that a peak average power demand in excess of the MDL is predicted for the interval, instructions 366 determine if the REDLINE FLAG is set (RED F = 1) indicating a presently recognized redline condition. If the answer to instructions 365 is NO, instructions 367 request a determination of whether the difference between the MDL and the actual average demand for the most recent interval is less than or equal to one-half of the redline table rating. Instructions 367 provide a further assurance that there is no predicted redline condition for the current demand interval, which is considered necessary since the estimated average demand value (ED) is only of a coarse nature. If the answer to instructions 367 is YES, the CPU next executes instructions 366. If the answer is NO, indicating no prospective redline condition, instructions 368 next request a determination of whether or not there is an auxiliary generator within the facility. Certain facilities such as hospitals, military bases, and even large universities maintain an auxiliary generator to provide emergency electric power in the event of a utility blackout. If there is an auxiliary generator, instructions 370 request a determination of whether or not the generator on time (OT) clock is at a maximum value. This clock monitors the on time of the auxiliary generator which is controlled to minimum and maximum on times. If the OT clock is at the maximum value, instructions 371, 372 next determine if the generator may be shut off since there is no predicted redline condition. Instructions 371 determine if the difference between the MDL and the ED value is greater than the total sum of the redline table rating, and if YES a further comparison is made to determine if the difference between the MDL and the actual demand is greater than the total sum. If the answer to instructions 372 is YES, instructions 374-376 request a reset of the redline flag, a printout command on the CPU space CRT (Fig. 3) to stop the generator, and an audible alarm to alert the operator in the event that no one is presently at the central control console. Following instructions 376, or following a NO answer to either of instructions 352, 357, 368 and 370-372, the CPU proceeds to the flowchart of Fig. 9B.

If the answer to instructions 366 is NO, instructions 378 request a setting of the redline flag, followed by instructions 379 identical to 368 requesting a determination of whether or not there is an auxiliary generator. If YES instructions 380 request a setting of the OT clock to zero minutes and instructions 381 request a determination of whether the generator can be presently turned on.

This is necessary since the generator may be disabled due to failure or schedule shutdown. If the answer to instructions 381 is YES, instructions 382, 383 next request a printout message to start the generator and sound an audible alarm to notify the operator, after which the CPU exits the redline program.

Following a YES answer to instructions 366, instructions 386 request a determination of whether there is an auxiliary generator, as in instructions 368, 369. As may be appreciated, each of the instructions requesting a determination of whether or not there is an auxiliary generator may be eliminated once a determination that a given facility does, or does not have auxiliary generating capacity. If the answer is YES, the CPU next executes instructions 388 which request an update of the OT clock by a determined time interval, typically a demand time interval, such that for a demand interval of thirty minutes the OT clock is updated by thirty minutes. This is to ensure that the generator will remain on for the remainder of the present demand interval in an attempt to limit the predicted peak average power demand. Following instructions 388, or a NO answer to instructions 379, 381, and 386, instructions 390 next request the CPU to shed, i.e. turn off those pieces of equipment listed in the REDLINE TABLE, whose power ratings total one-half of the redline table capacity (SUM R/2), after which the CPU exits the program.

The redline function illustrated by the flowchart of Fig. 9A is that of a coarse prediction of average demand within a demand interval which has just begun, as determine by instructions 352. The shedding of only one-half of the redline table rating in instructions 390 is provided to ensure that the total redline capacity is not shed prematurely in response to an ED value which is known to be less accurate than the predicted average interval demand (PID) provided within the demand interval following at least a first sample interval, as described in the flowchart of Fig. 9B.

Referring now to Fig. 9B the CPU continues with the redline function routine with instructions 394 which request the determination of the present total usage within the present demand interval, as provided through summation of the pulse signals from the watt meter 50 by the remote controller $58_f$ (Fig. 1). As shown, a present total usage value TuN = TuN-1 + uN, and is therefore the integration of successive usage samples provided at determined intervals of typically one minute by the controller $58_f$. Instructions 396 next request a determination of whether the present interval time $(t_{OI})$ is less than the first sample time period $(t_S)$. If NO, indicating that at least one sample period has elapsed since the start of the present demand interval, indicating that a sufficient number of sampled usage values has been provided within the present demand interval from which an accurate prediction may be made as to the total usage within the interval, the CPU next executes instructions 398 which request a determination of the four most recent total usage values, including, if necessary, sampled total usage values from the preceding interval to ensure four values TuN through TuN-3. Following instructions 398, and instructions 400 which request a determination of the remaining time in the interval, the CPU executes instructions 401 which request a calculation of a predicted total usage (PTu) for the present interval from the expression illustrated within the instruction block. The expression is identical to that provided in instructions 368 in calculating the ED value, and as described hereinbefore is derived from a linear regression technique as shown in appendix A. If the answer to instructions 396 is YES, indicating that the first sample period has not elapsed in the interval, the CPU executes instructions 402 which request a calculation of a PTu value based only upon the present total usage (TuN) determined in 394, multiplied by the ratio of the total interval time $(t_I)$ over the present interval time $(t_{OI})$. This value of PTu is less accurate than that provided through the linear regression formula of instructions 401, and is executed only when the present interval time is less than that equal to the first sample period since there can be no accurate calculation of a PTu value within the first sample period of the interval.

Following a PTu value calculation in either instructions 401, 402, the CPU next executes instructions 404 requesting a calculation of a predicted average demand for the interval (PID) which is a prediction of the prospective average power demand within the interval based upon the calculated PTu value. As shown, the PID value is in KW, being equal to the predicted total usage in kilowatt-hours divided by the total interval time expressed in hours. Since it is the peak average power demand in excess of the MDL which must be protected against, instructions 406 next request a determination of the difference between the PID and MDL values to determine if there is a prediction of a peak in excess of the MDL. If the value of the difference (X) is greater than zero, as determined in instructions 409, 410 the CPU executes instructions 411, 412 to determine the remaining interval time $(t_{RI})$ and the summation of the redline table rating (SUM R). Instructions 414 determine whether the product of the predicted overshoot value (X) multiplied by the ratio of the total interval time to the remaining interval time is greater than SUM R. If YES, the redline load shed is still limited to the SUM R value, however, if NO, it is desirable to limit the redline load shed only to that value necessary to protect against the peak since a present load shed of the entire redline table may be premature. Therefore, instructions 416, 417 request a shedding of the appropriate load values, after which instructions 418 request a determination of whether or not the redline flag is set. If the answer is NO, the CPU executes instructions 420, 425 identical to instructions 378-383 described hereinbefore with respect to Fig. 9A, to set the redline flag and turn on the auxiliary generator if available. If the answer to instructions 418 is YES the CPU exits the redline program at 428.

In summary, in the operation of the redline control function, the remote controller $58_f$ monitors the output from the meter 50 to determine the instantaneous total power usage by the facility within each demand interval. This is an integrating function in kilowat hours. The CPU provides a predicted total power usage within each demand interval in response to past sampled usage values in order that the predicted power demand may be calculated in each interval in advance of an actual average power demand peak in excess of the MDL. The CPU provides a predicted total usage at a repetition rate which is a submultiple of the demand time interval. As an example, for a demand interval of thirty minutes a precited total usage calculation and predicted average demand calculations are provided every one minute. This ensures both accurate predictions of power demand peaks in excess of the MDL for each demand interval, in addition to allowing a prediction early enough within the interval such that the prescribed electrical loads may be shed in an attempt to reduce, or eliminate the peak power overshoot. In Fig. 9A, instructions 354-358 provide an update of the MDL value in the event that even with redline load shedding the MDL value was exceeded by a peak average power demand, so that redline control can be provided to the new MDL value for which the facility is billed.

The load cycle function works in conjunction with the redline load shed control, in that when there is a redline condition (RED F = 1) the CPU sets the off times of the loads listed in the load cycle table to their maximum value to assist the redline table in reducing the total electrical load as much as possible for the longest allowable time interval.

When any load listed in the REDLINE TABLE is shed (turned off) in response to a redline condition (RED F = 1) it is left off for at least the minimum off time value established for the specific equipment, and listed in the table. At the end of the minimum off time interval, the load will be restored (turned on) so long as there is no redline condition at that time, otherwise the load will remain off for the maximum off time value established for the equipment. Following the expiration of the maximum off time the equipment is turned on regardless of the continuing presence of a redline condition. In these situations the function provided by the particular equipment is deemed essential for facility operation such that the equipment can no longer remain off despite the probability of exceeding the MDL, and the CPU commands the turn on of the equipment.

In addition to providing protection against peak average power demands in excess of the MDL by turning off, or shedding the selected equipment listed in the REDLINE TABLE, the supervisory control of the present invention further reduces the electrical load demand to avoid the peak by altering the operational performance of that equipment which cannot be turned off to effect an integration of the redline control function with the operating control functions of particular environmental conditioning equipment, such as the HVAC systems. This is provided by changing, automatically without operator assistance, the living space set point temperature reference values. With the exception of certain critical living spaces, such as laboratories where the ambient temperature must be maintained at closer tolerances, this allows for a facility wide reduction in mechanical heating and cooling requirements, instantaneously in response to the existance of a redline condition. The change in the space heat and cool set point temperature values to lower and higher values respectively, creates a wide differential temperature, or temperature drift band in which the HVAC mechanical heating and cooling apparatus is shut down.

In the hereinbefore referenced copending application Serial No. 78930001.9          the flowcharts included therein, illustrate the control of the mixed air temperature regulation, and the HVAC mechanical heating and cooling. These flowcharts may be modified for redline control by inserting additional instructions at the beginning of each flowchart as described herein, where reference to the flowcharts, is made by the same reference character numerals used in that application, but which are shown parenthetically to avoid confusion with similar reference numerals in the present application.

With respect to the cooling flowchart of Fig. (8), following a NO answer to instructions (381) and prior to instructions (386) requesting a determination of whether the actual space temperature is greater than the cool set point reference temperature ($T^R_{spC}$), insert an instruction 430 requesting a determination of whether or not this is an HVAC system selected for a change in $T^R_{spC}$. In response to a YES answer condition, insert an instruction 432 requesting a determination of whether or not there is a present redline condition. In response to a NO answer condition for both instructions 430, 432 add instruction 434 commanding a set of $T^R_{spC}$ to the normal selected value. In response to a YES answer condition to instructions 432 add instruction 436 commanding an increase in the $T^R_{spC}$ value by one °C. Following both instructions 434, 436, next execute the original instructions (386). This allows for automatic increase in the cool set point reference value in response to a redline condition, but only if the HVAC system is one designated as being subject to redline control, which designation may be readily changed by the operator.

The mechanical heating control flowchart of Fig. (9) is modified in an identical manner by the addition of instructions 440, 442, 444 and 446 between original instructions (412) and (417). Instruction 440 following a NO answer to instruction (412) and requesting whether this HVAC is one selected for a decrease in the heat set-point

- 42 -

reference temperature ($T^R_{spH}$) in response to redline. If YES, instructions 442 next determine a present redline condition. A YES answer to instructions 442 is followed by instructions 444 commanding a decrease in $T^R_{spH}$ by one °C. A NO answer to instructions 440, 442 is followed by instructions 446 commanding a normal $T^R_{spH}$ value. Following each of instructions 444, 446, next execute original instructions (417).

To help maintain space ambient temperature conditions during the change of $T^R_{spC}$ and $T^R_{spH}$ in response to a redline condition, the flowchart of Fig. (6) is also modified to provide for a full closed mixed air damper in response to a redline condition. This is provided by adding instructions 450 between original instructions (314) and (315) requesting if there is a present redline condition. If NO, execute instructions (315), if YES, execute new instructions 452 which request a determination of whether this is a system designated for redline action. Following a NO answer to instructions 452 execute instructions (315), following a YES answer execute instructions (316). Each of the added instructions in each of Figs. (6), (8), and (9) may be readily added by program change in the CPUs $54_a$, $54_b$.

The central supervisory control of the present invention provides total operational control of the entire network of environmental conditioning systems within a facility comprising some number of buildings each located at some distance from each other, and from the central control location. The system includes the use of a central CPU in combination with a RMP associated with each of the groups of environmental conditioning systems to be controlled, thereby providing a hierarchial control function. This hierarchy in control allows for the most efficient optimization of environmental conditioning system performance in an attempt to achieve the optimum energy savings. The operating temperature limits and individual reference values for each of the various systems within the facility may be adjusted independently to satisfy local conditions within a given building, or jointly to attempt an energy savings, such as the redline control function which reduces the peak power demands. Similarly, the total operating of the HVAC and perimeter heating systems may be adjusted on a facility wide basis, rather on a single building basis as in present prior art systems. The use of the CPU for outer loop control allows for control loops in individual HVAC systems which include a combination of both proportional and integral gain as described in the hereinbefore referenced application Serial No. 78930001.9 , which allows for energy conservative control of the individual HVAC outputs. Similarly, in combination with the redline control function, the load cycle function allows for a reduction in the total monthly power usage on a facility basis, rather than simply on a building basis where conservation is limited to the systems within the building. In addition, energy conservation may be achieved by reset of temperature set point reference values for each of the HVACc in the facility in order to limit the use of mechanical heating and/or cooling as a function of the total power demand usage at any given time. Again achievable efficiently only on a facility basis.

### APPENDIX A

The slope, $b_1$ of a linear regression curve is expressed (e.g. see: Ostle, Bernard; STATISTICS IN RESEARCH, 2nd Ed., Iowa State University Press at page 164) as:

$$(1) \quad b_1 = \frac{\sum_{i=1}^{N} (x_i - \bar{x})(y_i - \bar{y})}{\sum_{i=1}^{N} (x_i - \bar{x})^2}$$

The numerator may be simplified by cross multiplying, rearranging and identity substitution, as follows:

$$(2) \quad \sum_{i=1}^{N} \{x_i y_i - x_i \bar{y} - \bar{x} y_i + \bar{x}\bar{y}\}$$

$$(3) \quad \sum_{i=1}^{N} (x_i - \bar{x}) y_i - \sum_{i=1}^{N} x_i \bar{y} + \sum_{i=1}^{N} \bar{x}\bar{y}$$

$$(4) \quad \text{but} \quad \bar{x} = \frac{1}{N} \sum_{i=1}^{N} x_i, \text{ so } \sum_{i=1}^{N} x_i = N\bar{x}$$

$$(5) \quad \sum_{i=1}^{N} (x_i - \bar{x}) y_i - N\bar{x}\bar{y} + N\bar{x}\bar{y}$$

Therefore,

$$(6) \quad b_1 = \frac{\sum_{i=1}^{N} (x_i - \bar{x}) y_i}{\sum_{i=1}^{N} (x_i - \bar{x})^2}$$

Letting $x = t$ (time in seconds); the discrete solution across four sample times ($N = 4$) separated by interval T, such that

$$x_o = 0$$

$$x_1 = -T$$

$$x_2 = -2T$$

$$x_3 = -3T$$

$\bar{x} = -1.5T$, is found by the substitution into (6) of variables:

| $x_i$ | | $x_i - \bar{x}$ | $(x_i - \bar{x})^2$ |
|---|---|---|---|
| $x_0$ | 0 | 1.5T | $2.25T^2$ |
| $x_1$ | -T | .5T | $.25T^2$ |
| $x_2$ | -2T | -.5T | $.25T^2$ |
| $x_3$ | -3T | -1.5T | $2.25T^2$ |

So:

$$(7) \quad b_1 = \frac{y_0\,(1.5T) + y_1\,(.5T) + y_2\,(-.5T) + y_3\,-1.5T}{5T^2}$$

$$(8) \quad b_1 = \frac{.3y_0 + .1y_1 - .1y_2 - .3y_3}{T}\,\left(\frac{1}{Sec}\right)$$

Referring to Fig. 9A, let:

ED = Estimated Demand in KW; y = Demand = DA

$y_0 = DA_0$ = Demand for most recent interval

$y_1 = DA_1 = )$

$y_2 = DA_2 = )$ Demand for 2nd through 4th most recent interval -

$y_3 = DA_3 = )$

then

$$(9) \quad ED = DA_0 + b_1 \, t_{RI}$$

Where $t_{RI}$ is the time remaining in the demand interval therefore:

$$(10) \quad ED = DA_0 + (.3DA_0 + .1DA_1 - 1DA_2 - .3DA_3) \, t_{RI}$$

Referring to Fig. 9B, let y = Total usage in KWH = $T_u$

$$y_0 = T_{uN}$$

$$y_1 = T_{uN-1}$$

$$y_2 = T_{uN-2}$$

$$y_3 = T_{uN-3}$$

PTu = Predicted Total usage in KWH

$$(11) \quad \text{then} \quad PTu = T_{uN} + b_1 \, t_{RI}$$

$(12)$ so
$$PTu = T_{uN} + (.3T_{uN} + .1T_{uN-1} - .1T_{uN-2} - .3T_{uN-3}) \, t_{RI}$$

Although the invention has been shown and described with respect to exemplary embodiments thereof, in connection with circuitry to be used therewith in a variety of exemplary applications, it should be understood by those skilled in the art that the invention may be practiced in a wide variety of configurations and utilizations, some of which are described hereinbefore, and that the foregoing and various other changes, omissions and additions may be made in and to the invention without departing from the spirit and the scope thereof.

CLAIMS:

1.     In a method of limiting, in any given demand interval, the peak average electrical power demand of a plurality of environmental conditioning systems (ECS), each including one or more power consuming elements, comprising the steps of:

defining the time limits of the demand interval; as characterized by the steps of:

measuring the total power usage in kilowatts, periodically within the demand interval;

determining from the measured total power usage values, a predicted total average power demand in kilowatts in a current interval;

comparing the predicted total demand in a current interval with an established desired maximum power demand; and

reducing the power consumption of one or all of the power consuming elements in a selected number of the ECS systems in response to a predicted total demand greater than the established desired maximum power demand.

2.     The method of claim 1, as further characterized by the step of determining a predicted total average power demand in a current interval including the steps of:

determining the four most recent measurements of total power usage within the current interval;

determining the slope value of a straight line representing the average of the change in total power usage in each of the four most recent measurements;

multiplying the slope value by the incremental time remaining in the interval from the time of the last measured total usage value to the end of the demand interval, and adding the product to the value of the last total usage measurement to provide a predicted total usage value; and

dividing the predicted total usage value by the total time of the defined demand interval to provide a predicted average power demand value for the demand interval.

3. The method of claim 1, as further characterized by the last step of reducing including the steps of:

establishing a priority list of a selected number of the several environmental conditioning systems and the power consuming elements therein;

reducing the power consumption of one or all of the power consuming elements within the selected environmental conditioning systems in sequence, in dependence on the established priority sequence from a least priority element to a highest priority system;

repeating the steps of measuring the total power usage, predicting the total power demand, and comparing the predicted demand with the established maximum power demand while performing the step of reducing power consumption; and

restoring the power consumption of the elements in response to a predicted average power demand less than the established maximum power demand.

4. The method of claim 3, as further characterized by the step of reducing the power consumption of one or all of the power consuming elements including the step of turning off the element.

5. Apparatus for automatically limiting, over a determined demand interval, the peak average power demand of a plurality of environmental conditioning systems, each having power consuming elements, comprising:

power measuring means, for providing continuous sensed parameter signals representative of the total power usage in kilowatt hours in dependence on the time of day; as characterized by:

control interface means, disposed in each ECS, and each responsive to closed loop control signals presented at an input thereof for providing parameter control signals to selected ones of the power consuming elements in the associated ECS; and

electronic processing means, providing an actual time of day signal, and having means for storing signal including a maximum power demand limit signal, said processing means further including means for successively sampling periodically and registering in said means for storing signals, successively sampled values of said actual total power usage signal, said processing means providing a predicted total usage signal in kilowatt hours in dependence on the four most recent sampled values of said actual total power usage, said processing means further providing in each of said sample periods, a predicted peak average demand signal in watts in dependence on said predicted total usage signal, said processing means comparing said predicted demand signal with said maximum demand limit signal for providing, in response to said predicted demand signal magnitude greater than that of said maximum demand limit signal, power limit closed loop control signals to said control interface means associated with a selected one or all of the power consuming elements in a determined number of environmental conditioning systems to reduce the power consumption thereof.

6. The apparatus of claim 4, as further characterized by said means for storing signals further including signals representative of a priority listing of each power consuming element in a selected number of the environmental conditioning systems, extending in sequence, from a least priority element to a highest priority system, said processing means providing said power limit closed loop control signals to control interface means associated with the elements in said priority listing in dependence on said priority sequence established therein.

7.    The apparatus of claim 6 as further characterized by said processing means including in said power limit closed loop control signals turn off signals for de-energizing the selected ones of the power consuming elements in said priority listing.

FIG.1

FIG. 2

FIG.3

0003010

3/1o

FIG. 4

0003010

FIG.5

FIG.6

FIG. 7

FIG.8

0003010

FIG.9A

ENTER ~350

START OF DEMAND INTERVAL 352

354

DETERMINE TOTAL INTERVAL USAGE (TIU) IN KWH MEASURED IN LAST INTERVAL

CALCULATE ACTUAL DEMAND (DA) FOR LAST INTERVAL: $DA_o (KW) = \dfrac{TIu\ (KWH)}{t_I\ (H)}$ AND STORE VALUE. 355

356 DETERMINE MONTHLY DEMAND LIMIT (MDL)

357 $DA_o > MDL$

358 SET: $MDL = DA_o$; AND STORE

362 DETERMINE ACTUAL DEMAND (DA) FOR MOST RECENT FOUR INTERVALS ($DA_o - DA_3$)

363 CALCULATE ESTIMATED DEMAND (ED) FOR NEW INTERVAL $ED = DA_o + (0.3DA_o + 0.1DA_1 - 0.1DA_2 - 0.3DA_3)t_I$

364 DETERMINE: CURRENT MONTHLY DEMAND LIMIT (MDL) SUM OF REDLINE TABLE RATING (SUM R)

365 $MDL - ED \le \dfrac{SUM\ R}{2}$

367 $MDL - DA \le \dfrac{SUM\ R}{2}$

368 IS THERE AUX.GEN.

366 RED F=1

378 379 SET RED F=1

386 IS THERE AUX. GEN.

370 GEN. O.T.CLOCK =MAX

380 IS THERE AUX. GEN.

388 UPDATE GEN. O.T. CLOCK BY 30 MINUTES

380 SET GEN. O.T. CLOCK =0 MIN

371 $MDL - ED > SUM\ R$

381 CAN GEN. BE TURNED ON

372 $MDL - DA > SUM\ R$

390 SHED $\dfrac{SUM\ R}{2}$ OF REDLINE LOAD

374 SET RED F=0
375 PRINT "STOP GEN."
376 SOUND ALARM

382 PRINT "START GEN."
383 SOUND ALARM

TO FIG. 9 B

EXIT

FIG.9B

FROM
FIG
9 A

DETERMINE PRESENT TOTAL
USAGE IN INTERVAL $(Tu_N=Tu_{N-1}+u_N)$
FROM METER — *394*

$t_{OI} < |t_s|$ — *396*    NO ← → YES

DETERMINE FOUR MOST
RECENT TOTAL USAGE
VALUES:
$Tu_N$, $Tu_{N-1}$, $Tu_{N-2}$
AND $Tu_{N-3}$ — *398*

CALCULATE PREDUCTED
TOTAL USAGE (PTu)
FOR PRESENT INTERVAL:
$PTu(KWH)=Tu_N*\dfrac{t_I}{t_{OI}}$ — *402*

DETERMINE REMAINING INTERVAL TIME
$t_{RI}=t_I-t_{OI}$ — *400*

CALCULATE PREDICTED TOTAL USAGE (PTu)
FOR PRESENT INTERVAL:
$PTu=Tu_N+(0.3*Tu_N+0.1*Tu_{N-1}-0.1*Tu_{N-2}-0.3*Tu_{N-3})t_{RI}$ — *401*

CALCULATE PREDICTED INTERVAL DEMAND (PID): — *404*
$PID(KW)=\dfrac{PTu\ (KWH)}{t_I\ (H)}$

CALCULATE X=PID-MDL — *406*

$X>0$ — *408*    YES ← → NO

SOUND ALARM — *409*

PRINT: "PID>MDL BY
X(KW) AT TOD" — *410*

DETERMINE REMAINING INTERVAL TIME $t_{RI}=t_I-t_{OI}$ — *411*

DETERMINE SUM R — *412*

$X*\dfrac{t_I}{t_{RI}} > $ SUM R — *414*    NO ← → YES

SHED $X*\dfrac{t_I}{t_{RI}}$ (KW) — *417*

SHED SUM R(KW) — *416*

RED F=1 — *418*    NO ← → YES

SET RED F=1 — *420*

IS
THERE
AUX.GEN. — *421*    NO ← → YES

SET GEN. O.T. CLOCK=0 MIN — *422*

CAN
GEN. BE
TURNED
ON — *423*    YES → / NO →

SOUND ALARM — *424*

PRINT: "START GEN." — *425*

EXIT — *428*

# EUROPEAN SEARCH REPORT

European Patent Office

000**3010**
Application number

EP 78 93 0008

## DOCUMENTS CONSIDERED TO BE RELEVANT

| Category | Citation of document with indication, where appropriate, of relevant passages | Relevant to claim |
|---|---|---|
| X | BE - A - 845 958 (LOCKHEED ELECTRONICS CO. INC.)  * Page 2, line 21 - page 4, line 2; page 14, line 21 - page 21, line 31; figures 2,3 *  & US - A - 4 075 699 (R.A. SCHNEIDER et al.) | 1-7 |
| | US - A - 3 872 286 (R.E.J. PUTMAN)  * Column 2, lines 8-30 and 48-63; column 6, line 51 - column 7, line 19; column 9, line 61 - column 10, line 45; figures 5,11 * | 1,3-7 |
| | LANDIS & GYR MITTEILUNGEN, volume 22, no. 1, 1975, Zug A. HARTMANS: "Funktionsweise und Einsatzmöglichkeiten von Lastkontroll-Anlagen" pages 10-19.  * Page 11, right-hand column, line 1 - page 13, right-hand column, line 31 and figures 1,2 * | 1,5 |
| A | US - A - 3 387 121 (M. MACZUZAK et al.)  * Column 1, abstract; figure 2 * | 1,5 |
| A | US - A - 3 602 703 (T.R. POLENZ)  * Column 1, line 62 - column 2, line 19; column 2, lines 40-68; figure 1 * | 1,5 |
| | —— ./. | |

**CLASSIFICATION OF THE APPLICATION (Int. Cl.²)**

H 02 J 3/14
G 05 D 23/19

**TECHNICAL FIELDS SEARCHED (Int.Cl.²)**

H 02 J 3/14
3/10
G 01 R 11/64
21/00
G 05 D 23/19

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-03-1979 | POINT |

EPO Form 1503.1 06.78

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | US − A − 3 397 321 (R.A. NIEMANN)<br>* Column 7, claim 1, figure 2 *<br><br>---- | 1 | |
| | | | TECHNICAL FIELDS SEARCHED (Int. Cl.²) |

EPO Form 1503.2  06.78